# EUROPEAN PATENT SPECIFICATION

(11) **EP 3 788 765 B1**
(45) Date of publication and mention of the grant of the patent: **20.12.2023**
(21) Application number: 19796989.2
(22) Date of filing: 24.04.2019
(51) Int. Cl.: H04L 9/32, G06F 21/64, H04W 12/10, H04W 12/00, H04W 12/03, H04L 9/40, G06F 21/60

(54) **METHOD AND APPARATUS FOR NETWORK FUNCTION MESSAGING**
VERFAHREN UND VORRICHTUNG ZUR NETZFUNKTIONSBENACHRICHTIGUNG
PROCÉDÉ ET APPAREIL DE MESSAGERIE DE FONCTION DE RÉSEAU

(30) Priority: 03.05.2018 IN 201811016755
(43) Date of publication of application: 10.03.2021
(73) Proprietor: Nokia Technologies Oy, 02610 Espoo (FI)
(72) Inventor: BYKAMPADI, Nagendra S, Bangalore 560102 (IN); RAUSCHENBACH, Uwe, 81541 Munich (DE)
(74) Representative: Espatent Oy
(86) International application number: PCT/FI2019/050329
(87) International publication number: WO 2019/211517

(56) References cited:
- WO-A1-2017/053561
- US-A1- 2017 005 999
- US-A1- 2017 310 652
- NOKIA: "SBA: A framework for HTTP message protection scheme in SEPP", 3GPP DRAFT; S3-181427_FRAMEWORK FOR PROTECTION SCHEME IN SEPPV2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Belgrade (Serbia); 20180416 - 20180420 12 April 2018 (2018-04-12), XP051438567, Retrieved from the Internet: URL:http://www.3gpp.org/ftp/tsg%5Fsa/WG3%5 FSecurity/TSGS3%5F91%5FBelgrade/Docs/ [retrieved on 2018-04-12]
- CHINA MOBILE: "Living Document: Security of Service Based Architecture of 5G phase 1", 3GPP DRAFT; S3-180888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 2 March 2018 (2018-03-02), pages 1-18, XP051394670,
- NOKIA: "3GPP Draft; S3-181427_", SBA: A framework for HTTP message protection scheme in SEPP, 12 April 2018 (2018-04-12), XP051438567,
- AHMAD, I. et al.: "5G security: Analysis of threats and solutions", 2017 IEEE Conference on Standards for Communications and Networking (CSCN) IEEE, 18 September 2017 (2017-09-18), XP033241341, Retrieved from the Internet: URL:https://ieeexplore.ieee.org/document/8 088621 [retrieved on 2019-06-03]
- "3rd Generation Partnership Project; Technical Specification Group Services and System Aspects; Security architecture and procedures for 5G system (Release 15", 3GPP TS 33.501, 26 March 2018 (2018-03-26), XP055649677, Retrieved from the Internet: URL:https://www.3gpp.org/ftp/specs/archive /33_series/33.501/33501-f00.zip [retrieved on 2019-06-24]

## Description

### TECHNICAL FIELD

Various example embodiments relate to network function messaging.

### BACKGROUND

This section illustrates useful background information without admission of any technique described herein representative of the state of the art.

In 5G, a service based architecture is introduced to model services as network functions (NFs) that communicate with each other using RESTful APIs. In the scenario where the two communicating NFs are in two different PLMNs, communication happens over a roaming interface between the two participating PLMNs.

To protect NF specific content in the messages that are sent over the roaming interface, each 5G PLMN has a Security Edge Proxy (SEPP) as the entity sitting at the perimeter of the PLMN network and acting as a gateway that protects all the traffic going out of the network. The SEPP implements application layer security for data exchanged between two inter-network NFs at the service layer.

Application layer security involves protecting information sent in various parts of the HTTP message, including HTTP Request/Response Line, HTTP header and HTTP Payload. However, some parts of this message may need to be modified by the intermediaries (IPX providers) between the two SEPPs.

A standard contribution S3-181427 by Nokia disclosed an SBA: A framework for HTTP message protection scheme in SEPP. A standard contribution S3-180888 by CHINA MOBILE disclosed a Living Document: Security of Service Based Architecture of 5G phase 1.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention. According to a first example aspect, there is provided an apparatus as defined by appended claim 1.

The forming of the second message may further contain in the second message a modification structure for subsequent modifications by intermediate nodes. Alternatively, the modification structure may be added to the second message by another node such as an intermediate node.

The first and second sets collectively comprise all the features and sub-features of the first message parts.

The integrity protected second message part may be integrity protected as a single block.

The references to each of the features and sub-features of the first set may be individual for each feature and each sub-feature. Alternatively, each feature and corresponding sub-features may be represented by one reference.

The processor may be further configured to cause sending the second message towards the second network function.

The integrity protected second message part may be divided into a non-modifiable portion and a modifiable portion. The modifiable portion may comprise the modification structure. The modification structure may comprise a modification array. The modification structure may comprise a modification matrix. The modification structure may be configured to contain recordings of a plurality of subsequent modifications of the features and sub-features. The subsequent modifications of the features and sub-features may be integrity protected. The subsequent modifications of the features and sub-features may be integrity protected in the modification structure by entities that make the modifications. The modification structure may comprise as first entry a modification made by the sending security edge proxy, possibly as a zero modification.

The modification structure may comprise references to any features and sub-features that reside in the integrity protected second message part.

The modification structure may be configured to store modifications as representation of change over previous version of modified information, e.g. using JSON patch or JSON merge patch. Alternatively, the modification structure may be configured to store the modified information.

The integrity protected second message part may completely comprise the first message either as such or by reference to some portions of the first message that are contained by the encrypted second message part.

The modification structure may allow modification by another entity while enabling detecting what was modified, which entity has performed the modification and providing for integrity protection for the modification.

The first network function may be an Access and Mobility Function, AMF. The second network function may be an Authentication Server Function, AUSF.

The request line may consist of 1) an HTTP method, 2) a request URI, and 3) a protocol identifier. The URI may contain an authority, a hierarchical part, a query and a fragment part. The authority may contain a host and a port.

The response line may consists of a protocol identifier, a status code and a status text.

The first message may be an HTTP request. The first message may be an HTTP response.

The second message may be a roaming message. The second message may be an N32 message. The first message may be an HTTP message.

The encrypted second message part; the integrity protected second message part; and the modification structure may be contained by a payload of an HTTP message. The payload may be formatted using a JSON or an XML syntax.

According to a second example aspect, there is provided a method in a security edge proxy, as defined by appended claim 5.

According to a third example aspect, there is provided an apparatus as defined by appended claim 7.

The determining which of the modifications comprised by the modification structure are acceptable may comprise verifying integrity of each modification. The integrity of each modification may be verified by decrypting the modifications in a manner specific to an entity that has purportedly made the modification. The integrity of each modification may be verified using an appended integrity protector. The integrity protector may comprise a cryptographic signature. The integrity protector may comprise a message authenticator.

The determining which of the modifications comprised by the modification structure are acceptable may comprise checking which of the modifications were permissible based on a modification policy for the maker of the modification.

The processor may be further configured to cause forwarding the third message to the second network function.

The third message may comprise the first message and any changes made to the first message except for changes made by those modifications that were not found acceptable.

The processor may be further configured to cause:
determining how the modification structure has been modified by intermediate nodes; and
determining a final form of the second message resulting from acceptable changes by the at least one intermediate node; and correspondingly performing the constructing of the third message.

The determining how the modification structure has been modified by intermediate nodes may comprise determining whether the modification structure has been modified by the intermediate nodes.

According to a fourth example aspect, there is provided a method as defined by appended claim 12.

According to a fifth example aspect, there is provided a computer program comprising computer executable program code configured to execute a method of any preceding example aspect.

The computer program may be stored in a computer readable memory medium.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

According to a sixth example aspect, there is provided a system comprising two or more of the following: the apparatus of the first example aspect; the intermediate node of the first or third example aspect; the computer program of the fifth example aspect; and the memory medium.

Different non-binding example aspects and embodiments have been illustrated in the foregoing. The embodiments in the foregoing are used merely to explain selected aspects or steps that may be utilized in implementations. Some embodiments may be presented only with reference to certain example aspects. It should be appreciated that corresponding embodiments may apply to other example aspects as well.

### BRIEF DESCRIPTION OF THE DRAWINGS

For a more complete understanding of example embodiments, reference is now made to the following descriptions taken in connection with the accompanying drawings in which:
Fig. 1 shows an architectural drawing of a system of an example embodiment;
Fig. 2 shows a flow chart of a process of an example embodiment in a sending Security Edge Proxy;
Fig. 3 shows a flow chart of a process of an example embodiment in a receiving Security Edge Proxy;
Fig. 4 shows an example of a request message travel; and
Fig. 5 shows a block diagram of an apparatus according to an embodiment.

### DETAILED DESCRIPTON OF THE DRAWINGS

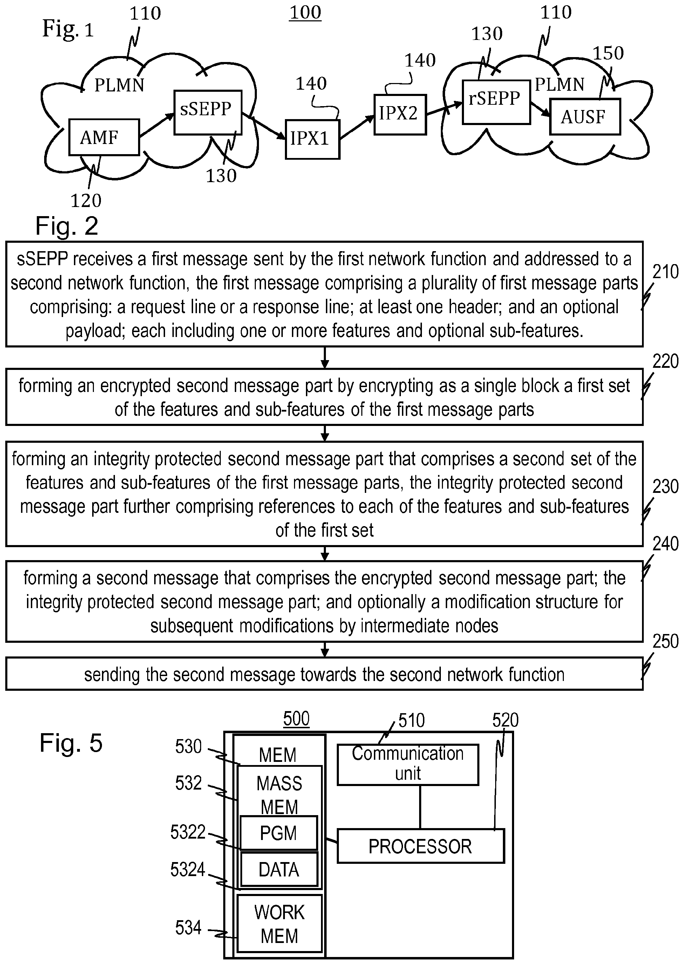

An example embodiment and its potential advantages are understood by referring to Figs. 1 through 5 of the drawings. In this document, like reference signs denote like parts or steps.

Fig. 1 shows an architectural drawing of a system 100 of an example embodiment. Fig. 1 shows two PLMNs 110 equipped with a first Network Function 120 that in a sending case is, for example, an Access and Mobility Function (AMF). The PLMNs each further comprise a Security Edge Proxy (SEPP) 130. The SEPP of one PLMN acts as a sending SEPP 130 or sSEPP and another one as a receiving SEPP 130 or rSEPP for one message. The SEPP 130 is a network node at the boundary of an operator's network that receives a message such as an HTTP request or HTTP response from the network function AMF 120, applies protection for sending, and forwards the reformatted message through a chain of intermediate nodes such as IP eXchanges (IPX) 140 towards the rSEPP 130.

The rSEPP 130 receives a re-arranged and potentially modified protocol message from an intermediate node 130, re-assembles the message (e.g. HTTP request or response), and forwards the re-assembled message towards a second network function within its operator's network, e.g. an Authentication Server Function (AUSF) 150. The re-assembled message can alternatively be sent towards any other network function of the second network.

The intermediate node 140 or intermediary in short is, for example, a network node outside the operator's network that receives (directly or indirectly via other intermediaries) a reformatted message from the sSEPP 130, that may selectively modify the message according to the method for integrity protection with modification tracking, and that forwards the message towards another intermediary 140 or to the rSEPP 130.

Notice that the rSEPP 130 and sSEPP 130 may simultaneously act in both roles and that their structure may also be similar or identical, so both are denoted by same reference sign 130 while their role in delivery of a particular message is identified by use of the prefix "s" or "r" indicating whether they send or receive.

Data re-arrangement according to an example embodiment is next described. Assuming the message being an HTTP message that complies to HTTP protocol, the message includes three protocol elements:
A) a request line or a response line. The request line consists, for example, of 1) an HTTP method, 2) a request URI that may contain an authority (host and port), a hierarchical part, a query and a fragment part, and 3) a protocol identifier. The response line consists, for example, of a protocol identifier, a status code and a status text.
B) A set of HTTP headers
C) An optional payload body, for instance formatted as JSON or XML

All three parts may contain parameters of a higher-layer protocol that is carried over HTTP, which may be of interest to the intermediaries for reading and/or modifying them.

For each part, the data are re-arranged (for instance by defining a suitable intermediate JSON structure or JSON structures) such that one of the three protection methods defined in the next part can be applied to them (or to desired one or more sub-parts such as given attributes or nested attributes).

Methods of protection of different parts can be freely chosen, while following standardized methods are disclosed for example:
a. **Encryption (encBlock):** The part(s) of the intermediate data structure that require(s) end-to-end (e2e) confidentiality protection is/are encrypted, e.g. using JSON Web Encryption (JWE) of RFC 7516;
b. **E2E Integrity Protection (ipBlock):** The part(s) of the intermediate data structure that require(s) e2e protection from modification by the intermediaries is/are signed, e.g. using JSON Web Signature (JWS) of RFC 7520;
c. **Integrity Protection with Modification Tracking (mipBlock):** A modification structure such as one or more arrays comprising the (selective modifications by the intermediaries to the data of the integrity protected part (ipBlock). This data structure is integrity protected in an example embodiment.

The integrity protection with modification tracking is configured to store in the modification structure one or more modifications together with a signature of a respective entity such as the sSEPP 130 or an intermediate node 140 (e.g., for all modifications in common or separately for each modification). The modification structure comprises a modification chain which in an embodiment has one entry per intermediary. In an example embodiment, each modification chain entry is integrity protected with the signature of the intermediary that has performed the modification. This way, the rSEPP 130 can subsequently determine separately for each change whether it was performed by an authorized intermediary 140 and whether it complies with the modification policy for that intermediary.

In an embodiment, the original modification structure is dynamic such that each intermediate node 140 adds a new field to a modified item so forming a growing array.

Fig. 2 shows a flow chart of a process of an example embodiment. The sSEPP 130 receives 210 a first message that has been sent by the first network function 120 and addressed to a second network function 150, the first message comprising a plurality of first message parts comprising: a request line or a response line; at least one header; and an optional payload; each first message part including one or more features and optional sub-features.

The process further comprises:
forming 220 an encrypted second message part by encrypting as a single block a first set of the features and sub-features of the first message parts;
forming 230 an integrity protected second message part that comprises a second set of the features and sub-features of the first message parts, the integrity protected second message part further comprising references to each of the features and sub-features of the first set;
forming 240 a second message that comprises the encrypted second message part; the integrity protected second message part; and optionally a modification structure for subsequent modifications by intermediate nodes ; and
sending 250 the second message towards the second network function.

In an example embodiment, the modification structure is added by some other node, such as a first intermediate node that forwards the second message or a first intermediate node that modifies the second message.

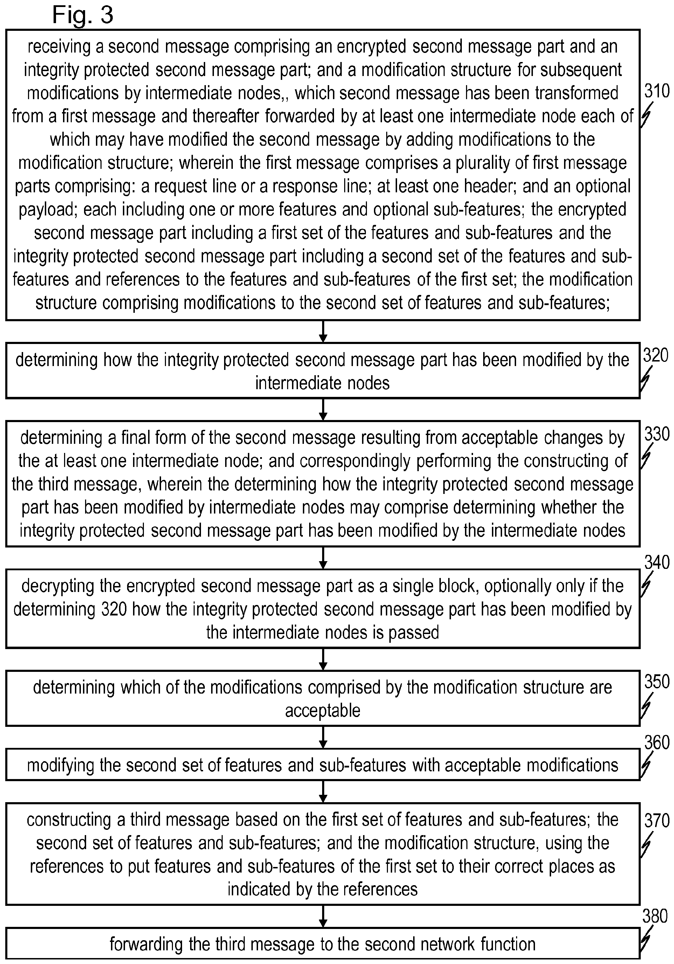

Fig. 3 shows a flow chart of a process of an example embodiment. The rSEPP 130 performs:
receiving 310 a second message comprising an encrypted second message part; an integrity protected second message part; and a modification structure for subsequent modifications by intermediate nodes, which second message has been transformed from a first message and thereafter forwarded by at least one intermediate node each of which may have modified the second message by adding modifications to the modification structure; wherein the first message comprises a plurality of first message parts comprising: a request line or a response line; at least one header; (and optionally a payload), each first message part including one or more features and optional sub-features; the encrypted second message part including a first set of the features and sub-features and the integrity protected second message part including a second set of the features and sub-features and references to the features and sub-features of the first set; the modification structure comprising modifications to the second set of features and sub-features;
determining 320 how the modification structure has been modified by the intermediate nodes; and
determining 330 a final form of the second message resulting from acceptable changes by the at least one intermediate node; and correspondingly performing the constructing of the third message, wherein the determining how the modification structure has been modified by intermediate nodes may comprise determining whether the intermediate nodes have made modifications in the modification structure.
decrypting 340 the encrypted second message part as a single block, optionally only if the determining 320 how the modification structure has been modified by the intermediate nodes is passed i.e. indicates that the modifications have been acceptable (e.g. based on a security policy for the intermediate nodes);
determining 350 which of the modifications comprised by the modification structure are acceptable (for example, by verifying integrity protection and/or that the modifications comply with a modification policy for the maker of the modifications);
modifying 360 the second set of features and sub-features with the modifications that are acceptable; and
constructing 370 a third message based on the first set of features and sub-features; the second set of features and sub-features; and the modification structure, using the references to put features and sub-features of the first set to their correct places as indicated by the references;
forwarding 380 the third message to the second network function.

Steps 350 and 360 are performed in an example embodiment in which it is desired to verify that the intermediate node made changes are permissible e.g. in view of their modification policy.

An example embodiment is next described, in which:
1. The sSEPP 130 receives 210 the first message (HTTP message) from the first network function 120 and does the following:
   1. a) Create a roaming message (e.g. a roaming message)
   1.a.1) If the first message is an HTTP request message, the sSEPP encapsulates the HTTP request line into a JSON object called **Request_Line** containing an attribute each for the method, the optional authority part of the URI, the remaining parts of the URI and the protocol of the request.
   1.a.2) If the first message is an HTTP response message, an HTTP response line is included in a **Response_Line** object that contains an attribute for each of the HTTP version, the status code and the status message.
   1.a.3) The sSEPP 130 encapsulates all the headers of the request into a JSON object (map) called **HTTP_Headers,** with the header name as key and the header value as value.
   1.a.4) The sSEPP 130 includes the payload body of the request in a JSON object called **Payload.**
   1.a.5) The sSEPP 130 then wraps the aforementioned JSON structures i.e. Request Line (1.a.1) or Response line (1.a.2), HTTP Headers (1.a.3) and the Payload (1.a.4, if any payload is present in the HTTP request or response message) into a top level JSON object called **ipBlock.**
   1.a.6) For each attribute that requires e2e encryption, the attribute value is contained in a top level **encBlock** JSON object and the attribute's value in the **ipBlock** is represented by a reference (**encBlockRef**) to the attribute value in the in the **encBlock.**
   1.a.7) If there are attribute(s) that require modifiable integrity protection, an array is created in a top level **mipBlock** JSON object to store modifications. The sSEPP may create a first entry in the mipBlock array to represent its own modifications, which may include an empty set of modifications, if storing an empty set is required by the embodiment. The ipBlock stores original values.
   1.a.8) Additional binary payloads in multipart messages from NF are represented as separate **binaryPayload** object.
   1.a.9) The three blocks - encBlock, ipBlock and mipBlock, form the HTTP payload of the roaming message.
   1.b) Protecting the roaming message
   1. b.1) The sSEPP 130 executes encryption as in step 220 operation (JWE) to encrypt the complete encBlock (and, if applicable, binaryPayload) JSON object.
   1.b.2) The sSEPP 130 integrity protects as in step 230 the complete ipBlock object by executing JWS on the entries in the ipBlock. Each of the entries in the ipBlock can be separately integrity protected. In another embodiment, all or some plurality of the entries in the ipBlock are jointly integrity protected.
   1.b.3) The sSEPP 130 integrity protects the mipBlock by executing JWS on the first entry in the mipBlock, if applicable.
2) The sSEPP 130 sends the protected roaming message (from 1.b) or second message towards the rSEPP 130.
3) Authorized intermediate nodes 140 or IPX providers update the modifiable attributes, store the modifications in the mipBlock, and each protect their own modifications with JWS.
4) The rSEPP 130 receives (as in step 310) the roaming message and does the following:
   4.1) re-assembling (or constructing 380 a third message) the HTTP Request or HTTP Response from the protected roaming message or second message as follows:
   checking the integrity of the ipBlock; and
   if successfully verified, decrypting 370 the encBlock;
   updating the ipBlock with the values from the decrypted encBlock by replacing the references to the encBlock, which are stored in the ipBlock, by the referenced decrypted values from the encBlock;
   verifying (steps 330, 340) IPX provider 140 updates of the attributes in the mipBlock.
   The modified values of the attributes are updated in the ipBlock. Hence, the ipBlock comprises all the features and sub-features of the first message, as modified by acceptable modifications.
   The modifying of the modifiable attributes or features / sub-features by the intermediate node 140 comprises in an example embodiment that the intermediate node 140:
   a) creates a **patchRequest** JSON object containing the following:
      i. (A) **full JSON object** that includes the desired changes. To construct a full JSON object, the intermediary 140 modifies the last full JSON object in the modification chain; OR (B) just a **forward delta** that only records the modifications made by the intermediary 140.
      ii. Identity, which uniquely identifies the intermediary 140 to the rSEPP 130.
      iii. Update order: Next available slot in the modification chain array. This is required to ensure that the order of updates cannot be tampered with.
   b) the intermediary 140 then executes JWS on the patchRequest JSON object with its signature and inserts it into the next available slot in the corresponding chain.

NOTE 1: in case the patchRequest is a full JSON object, the full JSON object corresponds to the full JSON object in the patchRequest; otherwise, the full JSON object is constructed from applying the patchRequests in the modification chain in sequence to the originalObject.

NOTE 2: When patchRequest contains a forward delta, the syntax and semantic to capture the delta may be taken from RFC 7386 - JSON Merge Patch or RFC 6902 - JSON Patch. Another embodiment uses other means such as UNIX diff format.

NOTE 3: The "Update order" is computed by the intermediary 140, e.g., as follows: The intermediary 140 obtains the integrity protected value of the "Update order" in the previous instance of the patchRequest in the modification chain, or in the originalObject if no patchRequest exists, and increments it by one. The value thus obtained, is checked to verify that it aligns with the next empty slot in the modification chain array.

In case of a Full object based modifications at one or more intermediaries 140: The rSEPP 130 can use the last entry in the modification chain directly as the consolidated JSON object. If the rSEPP 130 intends to apply a modification policy to the changes (e.g. determine whether they are allowed), it has to determine what has been changed by comparing with previous versions of the JSON object in the chain. The modification policy could either be enforced end-to-end (in which case comparison of the last object in the chain is done against the first object in the chain) or hop-by-hop (in which case comparison needs to be done between subsequent versions in the chain, and the modification policy can differ by intermediary).

In case of a Forward delta based modifications at one or more intermediaries 140: The receiving SEPP 130 has to re-create the consolidated JSON object by sequentially applying the patchRequests in the chain. Applying the modification policy hop-by-hop is straightforward, as the deltas are readily available. Applying the modification policy end-to-end requires applying the modification policy to all individual deltas, or by computing the cumulative delta by combining all forward deltas in the chain in sequence, and applying the end-to-end modification policy to that delta.

Assumptions of one example embodiment:
1. Each IPX provider is assumed to be the intermediary 140 through which the message travels on its way from the sSEPP 130 to the rSEPP 130.
2. IPX provider's public key or shared symmetric key to be available with the entities that are required to verify the signature or the sender.
3. IPX provider's agreed "scope of modification" is shared with the rSEPP 130, so that the rSEPP 130 can verify if the fields changed by the intermediary 140 are within its agreed scope.

Pre-requisite of one example embodiment:
1. SEPP 130 has authorized the intermediaries that are directly under the operator's control through an agreement, for e.g., and obtained the required public key or the established shared symmetric key needed for signature/mac verification. Each SEPP 130 authorizes its own IPX provider, and then shares the required public key/symmetric key with the other SEPPs 130.
2. Both SEPPs 130 are aware of how each of the IEs is protected - e2e confidentiality protected (***enc***), e2e integrity protected (***eZeProt***), e2e integrity protected but modifiable by authorized intermediaries (***modE2eProt***).

For the sSEPP 130, this may be defined e.g. by configuration. The rSEPP 130 can learn the applied protection from the structure of the message, and is e.g. configured with policies that define the permitted modifications and authorized intermediaries.

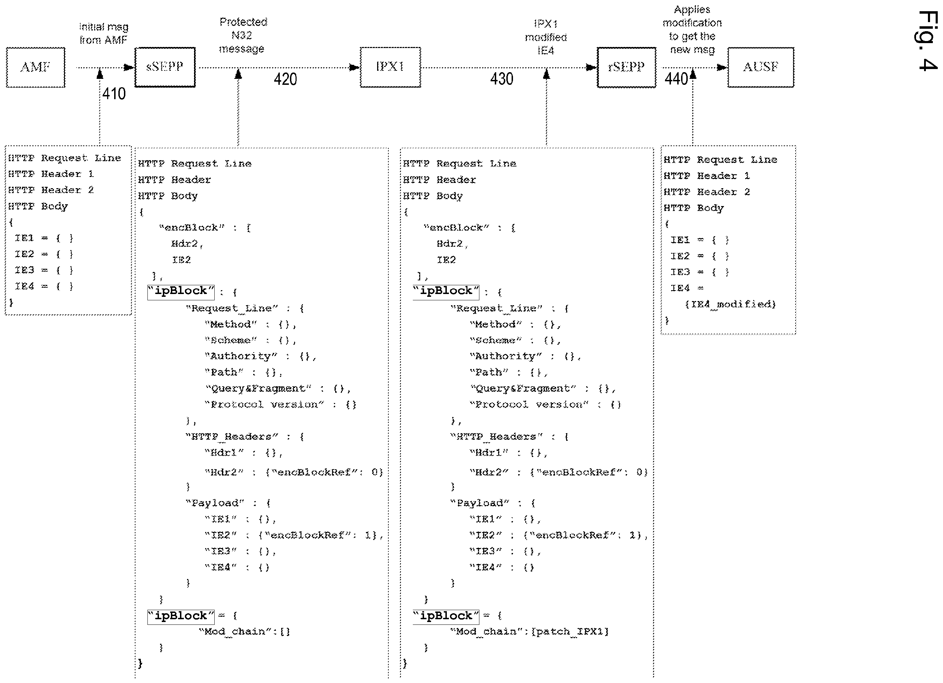

Fig. 4 shows an example of a request message travel. Fig. 4 illustrates how the original HTTP request message (i.e. first message) is transformed (to a second message) as it traverses in this example from an Access and Mobility Function (AMF) in the operator network via the sSEPP 130 at the edge and over a roaming interface through one IPX provider that modifies a given Information element (IE4 is used here as an example) in the message. The rSEPP 130 verifies the received (second) message, and reassembles the HTTP request message with the modified IE4 (to a third message, which may be same or different by content than the second depending e.g. on whether all modifications were acceptable), before forwarding (third message) it to the second network function 150 (e.g. AUSF).

410. sSEPP 130 receives the first or initial message from the first network function 120. In the first message, HTTP Header 1, and IE2 need end-to-end encryption, IE4 is a modifiable attribute, and the rest needs end-to-end integrity protection.

420. The sSEPP forms the second message or the roaming message (protected N32) that comprises:
- An encBlock that is an array of JSON objects that require encryption
- An ipBlock JSON object that is integrity protected
- An mipBlock that contains a modification structure such as one or more arrays for patch updates; first values (zero changes, for example) being possibly recorded by the sSEPP 130
- Attributes in HTTP_Headers and Payload that require encryption are moved to encBlock. Values of these attributes in the ipBlock are replaced by references pointing to the index in the encBlock
- mipBlock's initial content is empty, representing an unmodified ipBlock (or potentially contains e.g. zero changes or the modifiable values in case of non-delta coding).

430. IPX1 (intermediate node 140) updates one or more features or sub-features, in this case the information element IE4. To this end, the IPX1 creates patch_IPX1 for its update and appends it to the modification structure (e.g. Mod_chain array).

440. rSEPP reassembles the message and sends it to the second network function. At this stage, per Fig. 4, the rSEPP 130 verifies integrity of the ipBlock; decrypts the contents in encBlock; and places the decrypted values back into the ipBlock. Further, the rSEPP 130 verifies the update from the IPX1 and updates the original value in the ipBlock; reassembles the complete HTTP message from the updated ipBlock; and forwards the message to the target Network function.

In an example embodiment, the rSEPP further determines which of the modifications comprised by the modification structure are acceptable; modifies the second set of features and sub-features only with the modifications that are acceptable; and performs the constructing of the third message using the modification structure to the extent the modifications are acceptable.

In an example embodiment, the determining which of the modifications comprised by the modification structure are acceptable comprises verifying integrity of each modification. The integrity of each modification is verified, for example, by decrypting the modifications in a manner specific to an entity that has purportedly made the modification. The integrity of each modification is verified in an example embodiment using an appended integrity protector. The integrity protector may comprise a cryptographic signature and/or a message authenticator.

In an example embodiment, the determining which of the modifications comprised by the modification structure are acceptable comprises checking which of the modifications were permissible based on a modification policy for the maker of the modification

In Fig. 4, only one intermediate node 140 was drawn in sake of simplicity. In practise, there may be plural intermediate nodes 140 (IPX1, IPX2...) some of which make no modifications to the second message. In this case, an intermediate node 140 may either record zero changes in the modification structure or leave the modification structure untouched and simply forward the second message with no changes at all. It is also possible to mix these so that e.g. IPX2 records zero changes and IPX3 forwards the second message as received from IPX2.

Fig. 5 shows a block diagram of an apparatus 500 according to an embodiment. The apparatus may be used as a first network function 120, a SEPP 130, an intermediate node 140, or a second network function 150.

The apparatus 500 comprises a memory 530 including a persistent memory 532 that comprises computer program code 5322 and data 5324, and work memory 534. The apparatus 500 further comprises a processor 520 for controlling the operation of the apparatus 500 using the computer program code 5322, a communication circuitry 510 for communicating with other entities. The communication circuitry 510 comprises, for example, a local area network (LAN) port; a wireless local area network (WLAN) circuitry; Bluetooth circuitry; cellular data communication circuitry; or satellite data communication circuitry. The processor 520 comprises, for example, any one or more of: a master control unit (MCU); a microprocessor; a digital signal processor (DSP); an application specific integrated circuit (ASIC); a field programmable gate array; and a microcontroller. The processor 520 comprises in an example embodiment a processing circuitry comprising any one or more of: a master control unit (MCU); a microprocessor; a digital signal processor (DSP); an application specific integrated circuit (ASIC); a field programmable gate array; and a microcontroller. The processor may be formed of one or more processing elements. The processing elements are in an example embodiment distributed. In another example embodiment, the processing elements are comprised by one joint element.

As used in this application, the term "circuitry" may refer to one or more or all of the following:
(a) hardware-only circuit implementations (such as implementations in only analogue and/or digital circuitry) and;
(b) combinations of hardware circuits and software, such as (as applicable):
   (i) a combination of analogue and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is that inter-network network function messaging can be flexibly protected. Another technical effect of one or more of the example embodiments disclosed herein is that different parts of a first message can be encrypted all at once. Yet another technical effect of one or more of the example embodiments disclosed herein is that different protection methods can be mixed while repetition of values can be avoided by using references to features and sub-features in other parts or portions of the second message. Furthermore, the validating of the first message content transferred by the intermediate nodes may be performed by the rSEPP independently of the intermediate nodes.

Embodiments may be implemented in software, hardware, application logic or a combination of software, hardware and application logic. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 5. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined. Moreover, where reference is made to one component or entity, its functions may be distributed to or more sub-units, e.g. instead of one processor, a plurality of processors may perform some, though not necessarily all, operations of one entity.

Although various aspects are set out in the independent claims, other aspects comprise other combinations of features from the described embodiments and/or the dependent claims with the features of the independent claims, and not solely the combinations explicitly set out in the claims.

It is also noted herein that while the foregoing describes example embodiments, these descriptions should not be viewed in a limiting sense. Rather, there are several variations and modifications which may be made without departing from the scope as defined in the appended claims.

## Claims

1. An apparatus;
wherein the apparatus is a security edge proxy comprising:
an input for receiving a first message that has been sent by a first network function and addressed to a second network function;
the first message comprising a plurality of first message parts comprising: a request line or a response line; at least one header; and an optional payload; each including one or more features and optional sub-features (210);
a processor configured to cause:
forming an encrypted second message part by encrypting as a single block a first set of the features and sub-features of the first message parts;
forming an integrity protected second message part that comprises a second set of the features and sub-features of the first message parts, the integrity protected second message part further comprising references to each of the features and sub-features of the first set;
forming a second message that comprises the encrypted second message part and the integrity protected second message part; and
sending the second message;
wherein the first set and the second set are disjoint and collectively comprise all the features and sub-features of the first message parts.

2. The apparatus of claim 1, wherein the forming of the second message further contains in the second message a modification structure for subsequent modifications by intermediate nodes.

3. The apparatus of claim 2, wherein the modification structure is configured to store modifications as representation of change over previous version of modified information using a JavaScript Object Notation, JSON, patch or JSON merge patch.

4. The apparatus of claim 2, wherein the modification structure is configured to store the modified information.

5. A method in a security edge proxy, comprising:
receiving a first message that has been sent by a first network function and addressed to a second network function;
the first message comprising a plurality of first message parts comprising: a request line or a response line; at least one header; and an optional payload; each first message part including one or more features and optional sub-features;
forming an encrypted second message part by encrypting as a single block a first set of the features and sub-features of the first message parts;
forming an integrity protected second message part that comprises a second set of the features and sub-features of the first message parts, the integrity protected second message part further comprising references to each of the features and sub-features of the first set;
forming a second message that comprises the encrypted second message part and the integrity protected second message part; and
sending the second message;
wherein the first set and the second set are disjoint and collectively comprise all the features and sub-features of the first message parts.

6. The method of claim 5, wherein the forming of the second message further contains in the second message a modification structure for subsequent modifications by intermediate nodes.

7. An apparatus;
wherein the apparatus is a security edge proxy comprising:
an input for receiving a second message comprising an encrypted second message part, an integrity protected second message part, and a modification structure, which second message has been transformed from a first message and thereafter forwarded by at least one intermediate node each of which have modified the second message by adding modifications to the modification structure;
wherein the first message comprises a plurality of first message parts comprising: a request line or a response line; at least one header; and an optional payload; each first message part including one or more features and optional sub-features;
the encrypted second message part including a first set of the features and sub-features;
the integrity protected second message part including a second set of the features and sub-features and references to the features and sub-features of the first set; and
the modification structure comprising modifications to the second set of features and sub-features;
the apparatus further comprising a processor configured to cause:
decrypting the encrypted second message part as a single block; and
constructing a third message based on the first set of features and sub-features; the second set of features and sub-features; and the modification structure, using the references to put features and sub-features of the first set to their correct places as indicated by the references;
wherein the first set and the second set are disjoint and collectively comprise all the features and sub-features of the first message parts.

8. The apparatus of claim 7, wherein the processor is further configured to cause:
determining which of the modifications comprised by the modification structure are acceptable;
modifying the second set of features and sub-features only with the modifications that are acceptable; and
performing the constructing of the third message using the modification structure to the extent the modifications are acceptable.

9. The apparatus of claim 8, wherein the determining which of the modifications comprised by the modification structure are acceptable comprises verifying integrity of each modification.

10. The apparatus of any one of claims 7 to 9, wherein the determining which of the modifications comprised by the modification structure are acceptable comprises checking which of the modifications were permissible based on a modification policy for the maker of the modification.

11. The apparatus of any one of claims 7 to 10, wherein the processor is further configured to cause:
determining how the modification structure has been modified by intermediate nodes; and
determining a final form of the second message resulting from acceptable changes by the at least one intermediate node; and correspondingly performing the constructing of the third message.

12. A method, wherein the method is performed in a security edge proxy, the method comprising:
receiving a second message comprising an encrypted second message part; an integrity protected second message part, and a modification structure, which second message has been transformed from a first message and thereafter forwarded by at least one intermediate node each of which have modified the second message by adding modifications to the modification structure;
wherein the first message comprises a plurality of first message parts comprising: a request line or a response line; at least one header; and an optional payload; each first message part including one or more features and optional sub-features;
the encrypted second message part including a first set of the features and sub-features;
the integrity protected second message part including a second set of the features and sub-features and references to the features and sub-features of the first set; and
the modification structure comprising modifications to the second set of features and sub-features;
decrypting the encrypted second message part as a single block; and
constructing a third message based on the first set of features and sub-features; the second set of features and sub-features; and the modification structure, using the references to put features and sub-features of the first set to their correct places as indicated by the references;
wherein the first set and the second set are disjoint and collectively comprise all the features and sub-features of the first message parts.

13. A computer program comprising computer executable program code which, when executed by a processor of a computer apparatus, cause the computer apparatus to carry out a method according to any of claim 5, 6 or 12.

14. A system comprising two or more of the following: the apparatus of any one of claims 1 to 4; the apparatus of any one of claims 7 to 11; the computer program of claim 13; and a memory medium comprising the computer program of claim 13.

## Patentansprüche

1. Vorrichtung;
wobei die Vorrichtung ein Sicherheits-Edge-Proxy ist, der Folgendes umfasst:
einen Eingang zum Empfangen einer ersten Nachricht, die von einer ersten Netzwerkfunktion gesendet wurde und an eine zweite Netzwerkfunktion adressiert war;
wobei die erste Nachricht eine Vielzahl von ersten Nachrichtenteilen umfasst, die Folgendes umfassen: eine Anforderungszeile oder eine Antwortzeile; mindestens einen Header; und optionale Nutzdaten; wobei jedes ein oder mehrere Merkmale und wahlweise Untermerkmale (210) umfasst;
einen Prozessor, der dazu ausgelegt ist, Folgendes zu veranlassen:
Bilden eines verschlüsselten zweiten Nachrichtenteils durch Verschlüsseln eines ersten Satzes von Merkmalen und Untermerkmalen der ersten Nachrichtenteile als einen einzelnen Block;
Bilden eines integritätsgeschützten zweiten Nachrichtenteils, der einen zweiten Satz der Merkmale und Untermerkmale der ersten Nachrichtenteile umfasst, wobei der integritätsgeschützte zweite Nachrichtenteil ferner Referenzen zu jedem der Merkmale und Untermerkmale des ersten Satzes umfasst;
Bilden einer zweiten Nachricht, die den verschlüsselten zweiten Nachrichtenteil und den integritätsgeschützten zweiten Nachrichtenteil umfasst; und
Senden der zweiten Nachricht;
wobei der erste Satz und der zweite Satz disjunkt sind und zusammen alle Merkmale und Untermerkmale der ersten Nachrichtenteile umfassen.

2. Vorrichtung nach Anspruch 1, wobei das Bilden der zweiten Nachricht in der zweiten Nachricht ferner eine Modifikationsstruktur für nachträgliche Modifikationen durch Zwischenknoten enthält.

3. Vorrichtung nach Anspruch 2, wobei die Modifikationsstruktur dazu ausgelegt ist, Modifikationen als Repräsentation der Änderung gegenüber einer vorherigen Version von modifizierten Informationen unter Verwendung eines JavaScript-Object-Notation(JSON)-Patches oder eines JSON-Zusammenführungspatches zu speichern.

4. Vorrichtung nach Anspruch 2, wobei die Modifikationsstruktur dazu ausgelegt ist, die modifizierten Informationen zu speichern.

5. Verfahren in einem Sicherheits-Edge-Proxy, das Folgendes umfasst:
Empfangen einer ersten Nachricht, die von einer ersten Netzwerkfunktion gesendet wurde und an eine zweite Netzwerkfunktion adressiert war;
wobei die erste Nachricht eine Vielzahl von ersten Nachrichtenteilen umfasst, die Folgendes umfassen: eine Anforderungszeile oder eine Antwortzeile; mindestens einen Header; und optionale Nutzdaten; wobei jeder erste Nachrichtenteil ein oder mehrere Merkmale und wahlweise Untermerkmale umfasst;
Bilden eines verschlüsselten zweiten Nachrichtenteils durch Verschlüsseln eines ersten Satzes von Merkmalen und Untermerkmalen der ersten Nachrichtenteile als einen einzelnen Block;
Bilden eines integritätsgeschützten zweiten Nachrichtenteils, der einen zweiten Satz der Merkmale und Untermerkmale der ersten Nachrichtenteile umfasst, wobei der integritätsgeschützte zweite Nachrichtenteil ferner Referenzen zu jedem der Merkmale und Untermerkmale des ersten Satzes umfasst;
Bilden einer zweiten Nachricht, die den verschlüsselten zweiten Nachrichtenteil und den integritätsgeschützten zweiten Nachrichtenteil umfasst; und
Senden der zweiten Nachricht;
wobei der erste Satz und der zweite Satz disjunkt sind und zusammen alle Merkmale und Untermerkmale der ersten Nachrichtenteile umfassen.

6. Verfahren nach Anspruch 5, wobei das Bilden der zweiten Nachricht in der zweiten Nachricht ferner eine Modifikationsstruktur für nachträgliche Modifikationen durch Zwischenknoten enthält.

7. Vorrichtung;
wobei die Vorrichtung ein Sicherheits-Edge-Proxy ist, der Folgendes umfasst:
einen Eingang zum Empfangen einer zweiten Nachricht, die einen verschlüsselten zweiten Nachrichtenteil, einen integritätsgeschützten zweiten Nachrichtenteil und eine Modifikationsstruktur umfasst, wobei die zweite Nachricht aus einer ersten Nachricht umgewandelt und danach von mindestens einem Zwischenknoten weitergeleitet wurde, von denen jeder die zweite Nachricht durch Hinzufügen von Modifikationen zur Modifikationsstruktur modifiziert hat;
wobei die erste Nachricht eine Vielzahl von ersten Nachrichtenteilen umfasst, die Folgendes umfassen: eine Anforderungszeile oder eine Antwortzeile; mindestens einen Header; und optionale Nutzdaten; wobei jeder erste Nachrichtenteil ein oder mehrere Merkmale und wahlweise Untermerkmale umfasst;
wobei der verschlüsselte zweite Nachrichtenteil einen ersten Satz der Merkmale und Untermerkmale beinhaltet;
wobei der integritätsgeschützte zweite Nachrichtenteil einen zweiten Satz der Merkmale und Untermerkmale sowie Referenzen zu den Merkmalen und Untermerkmalen des ersten Satzes beinhaltet; und
wobei die Modifikationsstruktur Modifikationen am zweiten Satz von Merkmalen und Untermerkmalen umfasst;
wobei die Vorrichtung ferner einen Prozessor umfasst, der dazu ausgelegt ist, Folgendes zu veranlassen:
Entschlüsseln des verschlüsselten zweiten Nachrichtenteils als einen einzelnen Block; und
Konstruieren einer dritten Nachricht auf Basis des ersten Satzes von Merkmalen und Untermerkmalen; des zweiten Satzes von Merkmalen und Untermerkmalen; und der Modifikationsstruktur unter Verwendung der Referenzen, um Merkmale und Untermerkmale des ersten Satzes an ihre korrekten Stellen wie durch die Referenzen angezeigt zu platzieren;
wobei der erste Satz und der zweite Satz disjunkt sind und zusammen alle Merkmale und Untermerkmale der ersten Nachrichtenteile umfassen.

8. Vorrichtung nach Anspruch 7, wobei der Prozessor ferner dazu ausgelegt ist, Folgendes zu veranlassen:
Bestimmen, welche der von der Modifikationsstruktur umfassten Modifikationen akzeptabel sind;
Modifizieren des zweiten Satzes von Merkmalen und Untermerkmalen nur mit den Modifikationen, die akzeptabel sind; und
Durchführen des Konstruierens der dritten Nachricht unter Verwendung der Modifikationsstruktur in dem Maße, in dem die Modifikationen akzeptabel sind.

9. Vorrichtung nach Anspruch 8, wobei das Bestimmen welche der von der Modifikationsstruktur umfassten Modifikationen akzeptabel sind, das Verifizieren der Integrität von jeder Modifikation umfasst.

10. Vorrichtung nach einem der Ansprüche 7 bis 9, wobei das Bestimmen welche der von der Modifikationsstruktur umfassten Modifikationen akzeptabel sind, das Prüfen auf Basis einer Modifikationsrichtlinie des Vornehmenden der Modifikation, welche der Modifikationen zulässig sind, umfasst.

11. Vorrichtung nach einem der Ansprüche 7 bis 10, wobei der Prozessor ferner dazu ausgelegt ist, Folgendes zu veranlassen:
Bestimmen, wie die Modifikationsstruktur durch Zwischenknoten modifiziert wurde; und
Bestimmen einer abschließenden Form der zweiten Nachricht, die aus akzeptablen Änderungen durch den mindestens einen Zwischenknoten resultiert; und entsprechendes Durchführen des Konstruierens der dritten Nachricht.

12. Verfahren, wobei das Verfahren in einem Sicherheits-Edge-Proxy durchgeführt wird, wobei das Verfahren Folgendes umfasst:
Empfangen einer zweiten Nachricht, die einen verschlüsselten zweiten Nachrichtenteil, einen integritätsgeschützten zweiten Nachrichtenteil und eine Modifikationsstruktur umfasst, wobei die zweite Nachricht aus einer ersten Nachricht umgewandelt und danach von mindestens einem Zwischenknoten weitergeleitet wurde, von denen jeder die zweite Nachricht durch Hinzufügen von Modifikationen zur Modifikationsstruktur modifiziert hat;
wobei die erste Nachricht eine Vielzahl von ersten Nachrichtenteilen umfasst, die Folgendes umfassen: eine Anforderungszeile oder eine Antwortzeile; mindestens einen Header; und optionale Nutzdaten; wobei jeder erste Nachrichtenteil ein oder mehrere Merkmale und wahlweise Untermerkmale umfasst;
wobei der verschlüsselte zweite Nachrichtenteil einen ersten Satz der Merkmale und Untermerkmale beinhaltet;
wobei der integritätsgeschützte zweite Nachrichtenteil einen zweiten Satz der Merkmale und Untermerkmale sowie Referenzen zu den Merkmalen und Untermerkmalen des ersten Satzes beinhaltet; und
wobei die Modifikationsstruktur Modifikationen am zweiten Satz von Merkmalen und Untermerkmalen umfasst;
Entschlüsseln des verschlüsselten zweiten Nachrichtenteils als einen einzelnen Block; und
Konstruieren einer dritten Nachricht auf Basis des ersten Satzes von Merkmalen und Untermerkmalen; des zweiten Satzes von Merkmalen und Untermerkmalen; und der Modifikationsstruktur unter Verwendung der Referenzen, um Merkmale und Untermerkmale des ersten Satzes an ihre korrekten Stellen wie durch die Referenzen angezeigt zu platzieren;
wobei der erste Satz und der zweite Satz disjunkt sind und zusammen alle Merkmale und Untermerkmale der ersten Nachrichtenteile umfassen.

13. Computerprogramm, das einen computerausführbaren Programmcode umfasst, der, wenn er von einem Prozessor einer Computervorrichtung ausgeführt wird, die Computervorrichtung veranlasst, ein Verfahren gemäß einem der Ansprüche 5, 6 oder 12 umzusetzen.

14. System, das zwei oder mehr von Folgendem umfasst: die Vorrichtung nach einem der Ansprüche 1 bis 4; die Vorrichtung nach einem der Ansprüche 7 bis 11; das Computerprogramm nach Anspruch 13; und ein Speichermedium, das das Computerprogramm nach Anspruch 13 umfasst.

## Revendications

1. Appareil ;
dans lequel l'appareil est un mandataire de bord de sécurité comprenant :
une entrée pour recevoir un premier message qui a été envoyé par une première fonction de réseau et adressé à une deuxième fonction de réseau ;
le premier message comprenant une pluralité de premières parties de message comprenant : une ligne de demande ou une ligne de réponse ; au moins un en-tête ; et une charge utile facultative ; chacune comportant une ou plusieurs caractéristiques et sous-caractéristiques facultatives (210) ;
un processeur configuré pour provoquer :
la formation d'une deuxième partie de message chiffrée en chiffrant en un seul bloc un premier ensemble de caractéristiques et de sous-caractéristiques des premières parties de message ;
la formation d'une deuxième partie de message à intégrité protégée qui comprend un deuxième ensemble de caractéristiques et de sous-caractéristiques des premières parties de message, la deuxième partie de message à intégrité protégée comprenant en outre des références à chacune des caractéristiques et sous-caractéristiques du premier ensemble ;
la formation d'un deuxième message qui comprend la deuxième partie de message chiffrée et la deuxième partie de message à intégrité protégée ; et
l'envoi du deuxième message ;
dans lequel le premier ensemble et le deuxième ensemble sont disjoints et comprennent collectivement toutes les caractéristiques et sous-caractéristiques des premières parties de message.

2. Appareil selon la revendication 1, dans lequel la formation du deuxième message contient en outre dans le deuxième message une structure de modification pour des modifications ultérieures par des noeuds intermédiaires.

3. Appareil selon la revendication 2, dans lequel la structure de modification est configurée pour stocker les modifications en tant que représentation d'un changement par rapport à une version précédente d'informations modifiées à l'aide d'un correctif JSON (notation d'objets JavaScript) ou d'un correctif de fusion JSON.

4. Appareil selon la revendication 2, dans lequel la structure de modification est configurée pour stocker les informations modifiées.

5. Procédé dans un mandataire de bord de sécurité, comprenant :
la réception d'un premier message qui a été envoyé par une première fonction de réseau et adressé à une deuxième fonction de réseau ;
le premier message comprenant une pluralité de premières parties de message comprenant : une ligne de demande ou une ligne de réponse ; au moins un en-tête ; et une charge utile facultative ; chaque première partie de message comportant une ou plusieurs caractéristiques et sous-caractéristiques facultatives ;
la formation d'une deuxième partie de message chiffrée en chiffrant en un seul bloc un premier ensemble de caractéristiques et de sous-caractéristiques des premières parties de message ;
la formation d'une deuxième partie de message à intégrité protégée qui comprend un deuxième ensemble de caractéristiques et de sous-caractéristiques des premières parties de message, la deuxième partie de message à intégrité protégée comprenant en outre des références à chacune des caractéristiques et sous-caractéristiques du premier ensemble ;
la formation d'un deuxième message qui comprend la deuxième partie de message chiffrée et la deuxième partie de message à intégrité protégée ; et
l'envoi du deuxième message ;
dans lequel le premier ensemble et le deuxième ensemble sont disjoints et comprennent collectivement toutes les caractéristiques et sous-caractéristiques des premières parties de message.

6. Procédé selon la revendication 5, dans lequel la formation du deuxième message contient en outre dans le deuxième message une structure de modification pour des modifications ultérieures par des noeuds intermédiaires.

7. Appareil ;
dans lequel l'appareil est un mandataire de bord de sécurité comprenant :
une entrée pour recevoir un deuxième message comprenant une deuxième partie de message chiffrée, une deuxième partie de message à intégrité protégée, et une structure de modification, lequel deuxième message a été transformé à partir d'un premier message puis transféré par un ou plusieurs noeuds intermédiaires dont chacun a modifié le deuxième message en ajoutant des modifications à la structure de modification ;
dans lequel le premier message comprend une pluralité de premières parties de message comprenant : une ligne de demande ou une ligne de réponse ; au moins un en-tête ; et une charge utile facultative ; chaque première partie de message comportant une ou plusieurs caractéristiques et sous-caractéristiques facultatives ;
la deuxième partie de message chiffrée comportant un premier ensemble de caractéristiques et de sous-caractéristiques ;
la deuxième partie de message à intégrité protégée comportant un deuxième ensemble de caractéristiques et de sous-caractéristiques et des références aux caractéristiques et sous-caractéristiques du premier ensemble ; et
la structure de modification comprenant des modifications du deuxième ensemble de caractéristiques et de sous-caractéristiques ;
l'appareil comprenant en outre un processeur configuré pour provoquer :
le déchiffrement de la deuxième partie de message chiffrée en un seul bloc ; et
la construction d'un troisième message sur la base du premier ensemble de caractéristiques et de sous-caractéristiques, du deuxième ensemble de caractéristiques et de sous-caractéristiques et de la structure de modification, en utilisant les références pour placer les caractéristiques et les sous-caractéristiques du premier ensemble à leur place correcte telle qu'indiquée par les références ;
dans lequel le premier ensemble et le deuxième ensemble sont disjoints et comprennent collectivement toutes les caractéristiques et sous-caractéristiques des premières parties de message.

8. Appareil selon la revendication 7, dans lequel le processeur est en outre configuré pour provoquer :
la détermination des modifications comprises par la structure de modification qui sont acceptables ;
la modification du deuxième ensemble de caractéristiques et de sous-caractéristiques uniquement avec les modifications qui sont acceptables ; et
la construction du troisième message à l'aide de la structure de modification dans la mesure où les modifications sont acceptables.

9. Appareil selon la revendication 8, dans lequel la détermination des modifications comprises par la structure de modification qui sont acceptables comprend la vérification de l'intégrité de chaque modification.

10. Appareil de l'une des revendications 7 à 9, dans lequel la détermination des modifications comprises par la structure de modification qui sont acceptables comprend la vérification des modifications qui sont autorisées sur la base d'une politique de modification pour l'auteur de la modification.

11. Appareil de l'une des revendications 7 à 10, dans lequel le processeur est en outre configuré pour provoquer :
la détermination de la manière dont la structure de modification a été modifiée par des noeuds intermédiaires ; et
la détermination d'une forme finale du deuxième message résultant de changements acceptables par le au moins un noeud intermédiaire ; et en conséquence la construction du troisième message.

12. Procédé, dans lequel le procédé est effectué dans un mandataire de bord de sécurité, le procédé comprenant :
la réception d'un deuxième message comprenant une deuxième partie de message chiffrée, une deuxième partie de message à intégrité protégée et une structure de modification, lequel deuxième message a été transformé à partir d'un premier message puis transféré par un ou plusieurs noeuds intermédiaires dont chacun a modifié le deuxième message en ajoutant des modifications à la structure de modification ;
dans lequel le premier message comprend une pluralité de premières parties de message comprenant : une ligne de demande ou une ligne de réponse ; au moins un en-tête ; et une charge utile facultative ; chaque première partie de message comportant une ou plusieurs caractéristiques et sous-caractéristiques facultatives ;
la deuxième partie de message chiffrée comportant un premier ensemble de caractéristiques et de sous-caractéristiques ;
la deuxième partie de message à intégrité protégée comportant un deuxième ensemble de caractéristiques et de sous-caractéristiques et des références aux caractéristiques et sous-caractéristiques du premier ensemble ; et
la structure de modification comprenant des modifications du deuxième ensemble de caractéristiques et de sous-caractéristiques ;
le déchiffrement de la deuxième partie de message chiffrée en un seul bloc ; et
la construction d'un troisième message sur la base du premier ensemble de caractéristiques et de sous-caractéristiques, du deuxième ensemble de caractéristiques et de sous-caractéristiques et de la structure de modification, en utilisant les références pour placer les caractéristiques et les sous-caractéristiques du premier ensemble à leur place correcte telle qu'indiquée par les références;
dans lequel le premier ensemble et le deuxième ensemble sont disjoints et comprennent collectivement toutes les caractéristiques et sous-caractéristiques des premières parties de message.

13. Programme informatique comprenant un code de programme exécutable par ordinateur qui, lorsqu'il est exécuté par un processeur d'un appareil informatique, amène l'appareil informatique à mettre en œuvre un procédé selon l'une des revendications 5, 6 ou 12.

14. Système comprenant au moins deux des éléments suivants : l'appareil de l'une des revendications 1 à 4 ; l'appareil de l'une des revendications 7 à 11 ; le programme informatique selon la revendication 13 ; et un support de mémoire comprenant le programme informatique selon la revendication 13.
